# EUROPEAN PATENT SPECIFICATION

(11) **EP 4 481 230 B1**
(45) Date of publication and mention of the grant of the patent: **31.12.2025**
(21) Application number: 24172598.5
(22) Date of filing: 26.04.2024
(51) Int. Cl.: F16F 15/129, F16F 15/123

(54) **POWER TAKE-OFF DAMPER DEVICE**
ZAPFWELLENDÄMPFERVORRICHTUNG
DISPOSITIF AMORTISSEUR DE PRISE DE FORCE

(30) Priority: 19.06.2023 NL 2035123
(43) Date of publication of application: 25.12.2024
(73) Proprietor: Emitech Holding B.V., 8307 DE Ens (NL)
(72) Inventor: De Zwaan, Gerrit, 8307 DE Ens (NL)
(74) Representative: Nederlandsch Octrooibureau

(56) References cited:
- DE-A1- 102021 104 406
- US-B1- 6 247 571
- US-B2- 7 252 593

## Description

### Field of the invention

The present invention relates to a power take-off damper device for use between a driving member and a driven member, e.g., for use between an engine of a vehicle and a power take-off transmission respectively.

### Background art

US patent publication US6247571 B1 discloses a power transmitting mechanism in which a rotatable driving member transmits power and a rotatable driven member receives the transmitted power. The driving and driven members are concentrically and rotationally arranged relative to each other. A torsion member is accommodated between the driving member and the driven member. The power transmitting mechanism provides a first hysteresis mechanism including at least one friction member that may be split into a plurality of portions each passing through, with clearance, a respective hole or cut-out in the driven member. The power transmitting mechanism further provides a second hysteresis mechanism including at least one friction member generating hysteresis separate from that generated by the first hysteresis mechanism.

The power transmitting mechanism as disclosed may be viewed as a damper device exhibiting relatively large radial outer dimension and comprising complex axial and radial arrangements of various friction members, friction linings and spring members to achieve required torsional vibration damping between the driving member and the driven member.

### Summary of the invention

The present invention aims to provide an improved power take-off damper device for use between a driving member and a driven member, such as an engine of a vehicle and a power take-off transmission, respectively. The power take-off (hereinafter: PTO) damper device prevents unwanted vibrations and rattling of the driven member, e.g. the PTO transmission, when driven by the driving member, e.g. the engine of the vehicle. The PTO damper device of the present invention further provides reduced mechanical complexity and provides compact outer dimensions

According to the present invention, a PTO damper device as mentioned above is provided comprising a housing provided with a primary shaft receiving portion, and an inner disc arranged in the housing, wherein the inner disc is provided with a secondary shaft receiving portion. The primary shaft receiving portion and the secondary shaft receiving portion are axially spaced apart and concentrically arranged along a longitudinal axis of the housing.

The inner disc comprises a plurality of circumferentially arranged pad apertures each of which apertures has arranged therein a loosely fitted friction pad.

Further, a first outer disc and a second outer disc are arranged in the housing along the longitudinal axis on opposing sides of the inner disc, wherein the first outer disc and the second outer disc are rotationally immovable, i.e. blocked from rotating around the longitudinal axis, with respect to the housing.

The first outer disc is axially movable along the longitudinal axis and resiliently biased toward the second outer disc, wherein the first outer disc and the second outer disc are in frictional engagement with each friction pad.

The inner disc is rotatable, i.e. rotatable around the longitudinal axis, relative to the first outer disc and the second outer disc and in resilient rotational engagement with the first outer disc and the second outer disc, and wherein
the primary shaft receiving portion is configured to receive a driving or driven shaft and provide an angular clearance fit engagement with the shaft, and wherein the secondary shaft receiving portion is configured to receive the shaft and provide a tight fit engagement with the shaft.

According to the invention, the angular clearance fit engagement allows a shaft to rotate freely within the angular clearance provided by the primary shaft receiving portion whereas the tight fit engagement ensures that the shaft has no angular clearance in the secondary shaft receiving portion and as such the inner disc and the shaft will rotate in unison when the PTO damper device is in use. Advantageously, the PTO damper device exhibits relatively small outer dimensions by virtue of the coaxially arranged and axially spaced apart primary and secondary shaft receiving portions. Furthermore, when the PTO damper device is in use, the angular clearance provided by the primary shaft receiving portion allows the inner disc and shaft to rotate in resilient manner relative to the outer disc and second outer disc. The frictional engagement of each friction pad with the first outer disc and second outer disc provides, in conjunction with the loose fit of each friction pad in a corresponding pad aperture, rotational damping with hysteresis effect.

### Short description of drawings

The present invention will be discussed in more detail below, with reference to the attached drawings, in which
Figure 1A and 1B each show an embodiment of a PTO damper device connected to a driving member, such as a vehicle V and an engine K respectively, and a driven member, such as a PTO transmission T;
Figure 2 shows a three dimensional view of a PTO damper device according to an embodiment of the present invention;
Figure 3 shows a cross section of a PTO damper device according to an embodiment of the present invention;
Figure 4 shows a cross section of a PTO damper device according to another embodiment of the present invention;
Figure 5 shows a three dimensional exploded view of a first outer disc and a second outer disc arranged on opposing sides of an inner disc as used in the PTO damper device according to an embodiment of the present invention;
Figure 6 shows a first axial view of a PTO damper device according to an embodiment of the present invention;
Figure 7 shows a second axial view of a PTO damper device according to an embodiment of the present invention;
Figure 8 shows a three dimensional view of a PTO damper device according to another embodiment of the present invention;
Figure 9 shows a three dimensional exploded view of a first outer disc and a second outer disc arranged on opposing sides of an inner disc as used in the PTO damper device according to another embodiment of the present invention;
Figure 10 shows a third axial view of a PTO damper device according to another embodiment of the present invention.

### Detailed description of embodiments

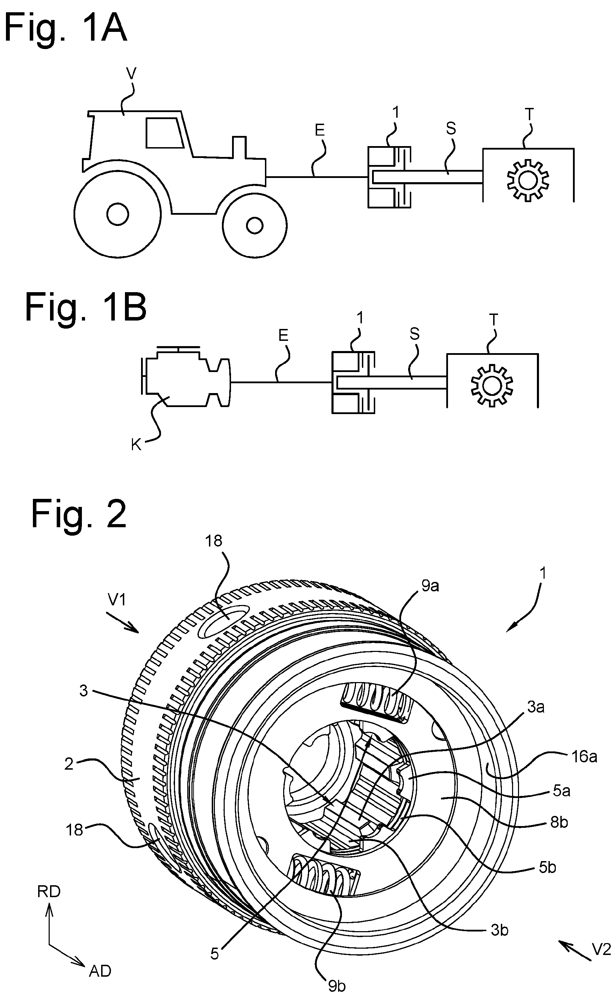

Figure 1A and 1B each show an embodiment of a PTO damper device 1 connected to a driving member, such as a vehicle V or engine K respectively, and a driven member, such as a PTO transmission T. As exemplary depicted, an output shaft E may be connected to the vehicle V or engine K at a first shaft end and connected to the PTO damper device 1 at a second shaft end. The engine K may be an internal combustion engine, which need not be part of the vehicle V as shown. That is, the engine K may be a generic engine or power plant acting as the driving member driving an output shaft E connected to the PTO damper device 1. In various exemplary applications the PTO damper device 1 may be mounted on a vehicle V and connected to an output shaft E thereof. As depicted, the PTO damper device 1 is configured to receive a shaft S that subsequently drives the PTO transmission T. Note that shaft S may also be connected to a driving member, which in Figures 1A and 1B would mean that the depicted vehicle V or engine K and the PTO transmission T may be interchanged. In this way the shaft S acts as the output shaft E.

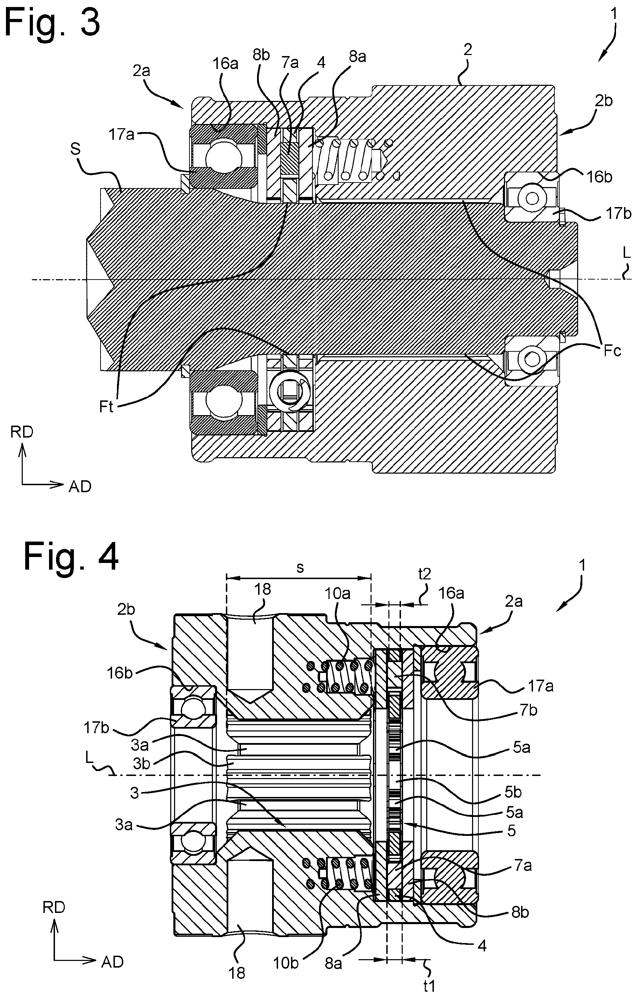

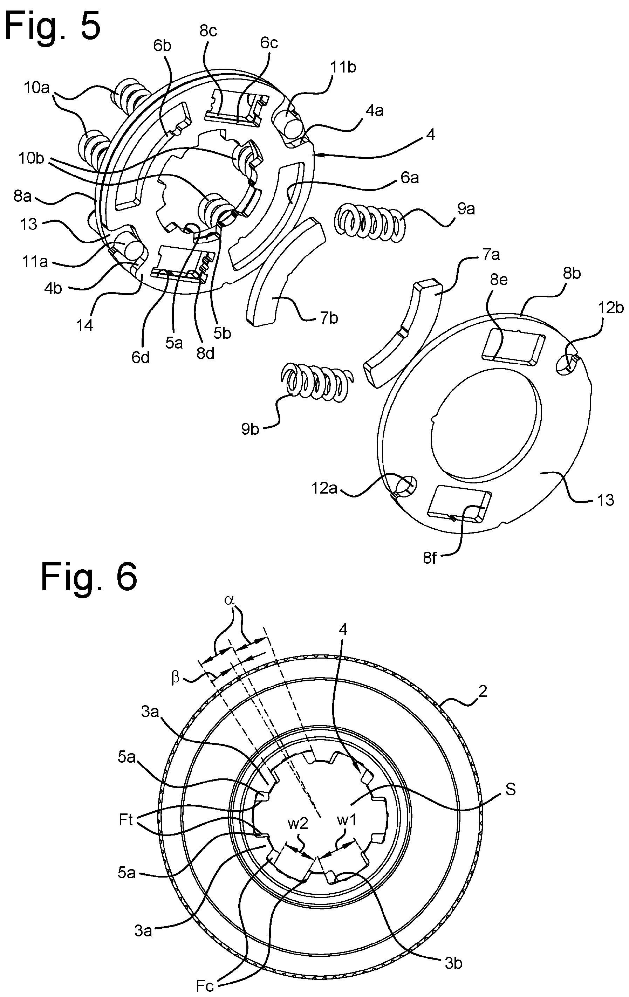

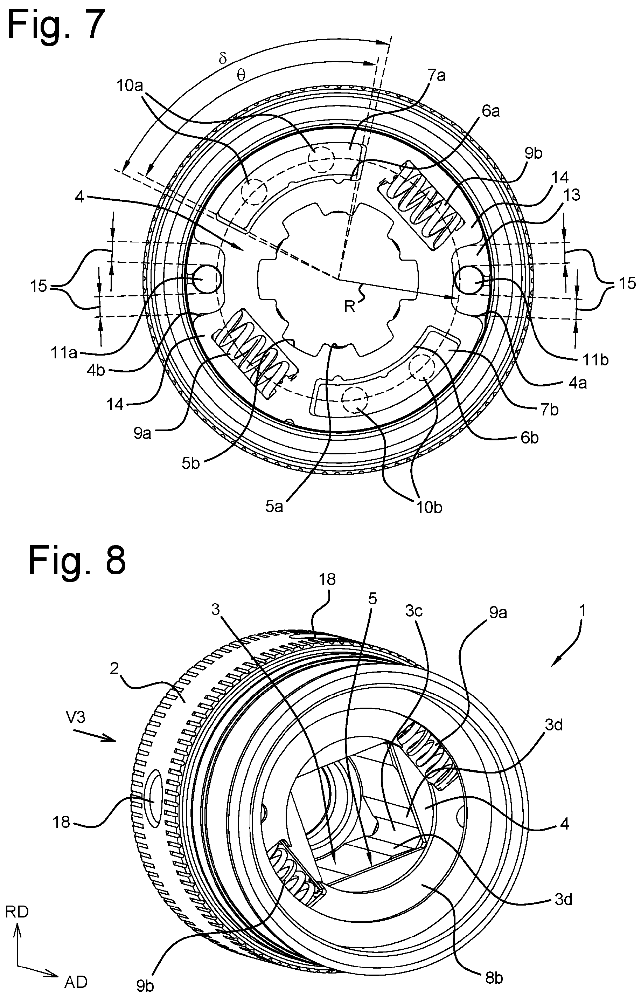

Figure 2 shows a three dimensional view of a PTO damper device 1 for use between a driving member and a driven member, e.g. a vehicle V or engine K and a PTO transmission T, respectively. Figure 3 and 4 each show a cross section of a PTO damper device 1 according to exemplary embodiments. Note that in Figure 2 there are depicted a first axial view V1 and a second axial view V2 that are used later in Figures 6 and 7 respectively. Also, note that in Figures 2, 3 and 4 there is shown a radial direction "RD" and axial direction "AD" to clarify as to what is seen as a direction in radial and axial/longitudinal sense. The radial and axial directions "RD" and "AD" are likewise depicted in Figure 8 as well.

As shown, the PTO damper device 1 comprises a housing 2 provided with a primary shaft receiving portion 3, and an inner disc 4 which is arranged in the housing 2. The inner disc 4 is provided with a secondary shaft receiving portion 5. In an embodiment, the housing 2 may comprises a plurality of mounting holes 18 for releasable connection with a driving or driven member, e.g. for releasable connection to an engine K or a PTO transmission T, respectively.

The primary shaft receiving portion 3 and the secondary shaft receiving portion 5 are axially spaced apart and concentrically arranged along a longitudinal axis L of the housing 2. As a result, the shaft S is simultaneously receivable by the primary shaft receiving portion 3 and the secondary shaft receiving portion 5 as depicted in Figure 3. That is, the PTO damper device 1 of is configured to receive a single shaft S that simultaneously engages the primary shaft receiving portion 3 and the secondary shaft receiving portion 5.

Referring to Figure 5, the inner disc 4 comprises a plurality of circumferentially arranged pad apertures 6a, 6b each of which apertures 6a, 6b has arranged therein a loosely fitted friction pad 7a, 7b. From the depicted embodiments it follows that the number of friction pads 7a, 7b, e.g. two, equals the number of pad apertures 6a, 6b, e.g. two, wherein each friction pad 7a, 7b is loosely arranged in a corresponding pad aperture 6a, 6b. Therefore, clearance is provided between each friction pad 7a, 7b and its corresponding pad aperture 6a, 6 to achieve the loose fit as mentioned above.

Referring to Figure 4 and 5, a first outer disc 8a and a second outer disc 8b are arranged in the housing 2 along the longitudinal axis L on opposing sides of the inner disc 4, wherein the first outer disc 8a and the second outer disc 8b are rotationally immovable with respect to the housing 2 and as such the first outer disc 8a and the second outer disc 8b are blocked or prevented from rotating around the longitudinal axis L relative to the housing 2. However, the first outer disc 8a is axially movable along the longitudinal axis L and is resiliently biased toward the second outer disc 8b, wherein the first outer disc 8a and the second outer disc 8b are in frictional engagement with each friction pad 7a, 7b. In particular, the first outer disc 8a biases toward the second outer disc 8b and as a result each friction pad 7a, 7b simultaneously engages the first and second outer discs 8a, 8b.

The frictional engagement as mentioned may be achieved by an embodiment wherein each friction pad 7a, 7b has a pad thickness t1 that is larger or exceeds an inner disc width t2 of the inner disc 4, so that the first outer disc 8a and the second outer disc 8b are pressed against each friction pad 7a, 7b as the first outer disc 8a resiliently biases toward the second outer disc 8b. In this embodiment each of the friction pads 7a, 7b protrudes in axial/longitudinal direction from the corresponding pad apertures 6a, 6b and as such first come into contact with the first outer disc 8a and the second outer disc 8b.

The inner disc 4, which is arranged between the first outer disc 8a and the second outer disc 8b, is rotatable relative to the first outer disc 8a and the second outer disc 8b and in resilient rotational engagement with the first outer disc 8a and the second outer disc 8b. Put differently, the inner disc 4 is arranged to rotate around the longitudinal axis L relative to the housing 2 and thus relative to the first outer disc 8a and the second outer disc 8b. The resilient rotational engagement of the inner disc 4 with the first and second outer discs 8a, 8b may be viewed as a resilient torque applied to the inner disc 4 in a direction opposite to a direction of rotation. Therefore, in case the inner disc 4 rotates around the longitudinal axis L relative to the first outer disc 8a and the second outer disc 8b in e.g. clockwise direction, then the inner disc 4 experiences a resilient torque in counter clockwise direction.

As further depicted in Figure 3 and 4, the primary shaft receiving portion 3 is configured to receive a driving or driven shaft S and provides an angular clearance fit engagement "Fc" with the shaft S whilst the secondary shaft receiving portion 5 is configured to receive the (same) shaft S and provides a tight fit engagement "Ft" with shaft S. The angular clearance fit engagement Fc may be seen as allowing a relatively small angular freedom of rotation or angular clearance (see e.g. angular clearance "α" in Figure 6) over which the shaft S is able to freely rotate with respect to the housing 2 before abutment in circumferential direction is achieved between the shaft S and the primary shaft receiving portion 3. The tight fit engagement Ft ensures that the shaft S has no room for rotation relative to the inner disc 4.

Therefore, when the PTO damper device 1 is in use, the angular clearance fit engagement Fc allows a shaft S to be simultaneously receivable by the primary shaft receiving portion 3 and secondary shaft receiving portion 5 and to rotate freely within the angular clearance fit engagement Fc provided by the primary shaft receiving portion 3. The tight fit engagement Ft ensures that the shaft S has no angular clearance in the secondary shaft receiving portion 5 such that the inner disc 4 and the shaft S rotate in unison relative to the housing 2 over the available angular clearance α provided by the angular clearance fit engagement Fc.

Advantageously, the PTO damper device 1 exhibits relatively small outer dimensions by virtue of the coaxially arranged and axially spaced apart primary and secondary shaft receiving portions 3, 5. Furthermore, when the PTO damper device 1 is in use, the angular clearance fit engagement Fc provided by the primary shaft receiving portion 3 allows the inner disc 4 and shaft S to rotate in resilient manner relative to the first outer disc 8a and the second outer disc 8b, wherein the frictional engagement of each friction pad 7a, 7b with the first outer disc 8a and the second outer disc 8b provides for rotational damping with hysteresis effect.

Referring to Figure 4 and the first axial view V1 of Figure 6, in an advantageous embodiment, the primary shaft receiving portion 3 and the secondary shaft receiving portion 5 may have an angular offset β when the PTO damper device 1 is in rest, i.e.. in absence of a shaft S. In this embodiment, the secondary shaft receiving portion 5 and thus the inner disc 4 is provided with an asymmetrical angular clearance in clockwise and counter clockwise direction relative to the primary shaft receiving portion 3. As depicted in Figure 6, because of the angular offset β, the inner disc 4 is provided with a counter clockwise angular clearance of α-β and a clockwise angular clearance α+β when the PTO damper device 1 is in rest. The main advantage of this angular offset β is to achieve a substantially symmetrical angular clearance α in clock and counter clockwise direction when the PTO damper device 1 drives e.g. a PTO transmission T but without an external load on the PTO transmission T. The angular offset β thus takes into account internal friction of the PTO transmission T, so that the inner disc 4 and a shaft S received in the secondary shaft receiving portion 5 are provided with a substantially symmetric angular clearance α in clock and counter clockwise direction with respect to the housing 2 under a no load scenario of the PTO transmission T.

At this point it is emphasized that the angular clearance α and angular offset β are schematically depicted for clarity and need not be representative as these angles may be smaller in real applications. For example, in an embodiment, the angular clearance fit engagement Fc may provide an angular clearance α of e.g. 4-8° degrees, e.g. 6 degrees°.

In an embodiment, as shown in Figure 4, the primary shaft receiving portion 3 may have a shaft receiving axial width "s" larger than the inner disc width t2 of the inner disc 4. In this embodiment the primary receiving portion 3 is arranged to have sufficient axial width s to transfer all loads between the driving member and driven member by the PTO damper device 1, so that the inner disc's 4 main task is to provide damping and prevent unwanted vibrations and rattling of the driven member, e.g. the PTO transmission T. Therefore, the inner disc 4 is not arranged to cope with high loads imposed by the driving member for example.

As mentioned earlier, the inner disc 4 is rotatable around the longitudinal axis L relative to the housing 2, in particular relative to the first outer disc 8a and the second outer disc 8b, and wherein the inner disc 4 is in resilient rotational engagement with the first outer disc 8a and the second outer disc 8b. The resilient rotational engagement exists in both rotational directions, e.g. clockwise and counter clockwise direction.

Referring to Figure 5 and the second axial view V2 of Figure 7, the resilient rotational engagement may be provided by an exemplary embodiment wherein the PTO damper device 1 further comprises a plurality of circumferentially arranged first spring members 9a, 9b in resilient engagement with the inner disc 4, the first outer disc 8a and the second outer disc 8b, and wherein each of the first spring members 9a, 9b and each of the pad apertures 6a, 6b are arranged along a substantially similar circumferential radius R as measured from the longitudinal axis L. In this embodiment the plurality of circumferentially arranged first spring members 9a, 9b are in simultaneous resilient engagement with the inner disc 4 and the first and second outer discs 8a, 8b. As a result, when the inner disc 4 rotates relative to the first and second outer discs 8a, 8b, the inner disc 4 is resiliently biased in opposite direction toward a neutral position in which the plurality of first spring members 9a, 9b have a minimum amount of stored energy. Furthermore, since each of the first spring members 9a, 9b and each of the pad apertures 6a, 6b are arranged along the substantially similar circumferential radius R, the PTO damper device 1 can be made smaller and more compact in radial direction.

In the exemplary embodiment shown in Figure 5, the inner disc 4 may comprise a plurality of spring apertures 6c, 6d, wherein the first outer disc 8a comprises a corresponding plurality of spring apertures 8c, 8d and wherein the second outer disc 8b also comprise a corresponding plurality of spring apertures 8e, 8f. The spring apertures 6c, 6d of the inner disc 4, the spring apertures 8c, 8d of the first outer disc 8a, and the spring apertures 8e, 8f of the second outer disc 8b are all aligned accordingly in radial and circumferential direction for receiving the plurality of first spring members 9a, 9b. In this way the plurality of first spring members 9a, 9b are in resilient engagement with the inner disc 4 and the first and second outer discs 8a, 8b. For example, a rotation of the inner disc 4 relative to the first and second outer discs 8a, 8b causes compression or expansion of the plurality of first spring members 9a, 9b and as such resilient rotational behaviour of the inner disc 4 is achieved.

It was mentioned earlier that the first outer disc 8a is axially movable along the longitudinal axis L and resiliently biased toward the second outer disc 8b. The resilient biasing of the first outer disc 8a may be achieved by an exemplary embodiment as depicted in Figure 4 and 5, wherein the PTO damper device 1 further comprises a plurality of second spring members 10a, 10b arranged in the housing 2 and axially biasing the first outer disc 8a toward the second outer disc 8b. In this way the first outer disc 8a can be reliably and forcefully biased toward the second outer disc 8b to achieve good frictional engagement with each friction pad 7a, 7b.

As further depicted, in an embodiment each of the pad apertures 6a, 6b is aligned with one or more second spring members of the plurality of second spring members 10a, 10b. In this embodiment, the biasing forces imposed by the plurality of second spring members 10a, 10b are aligned with corresponding pad apertures 6a, 6b to minimize e.g. deformation of the first and/or second outer disc 8a, 8b when pushed by the plurality of second spring members 10a, 10b, and/or to achieve the most effective friction engagement between each of the friction pads 7a, 7b and the first and second outer discs 8a, 8b.

Referring to the second axial view V2 of Figure 7, in an embodiment each pad aperture 6a, 6b circumferentially spans an aperture angle δ, and wherein each friction pad 7a, 7b circumferentially spans a pad angle θ which is less than the aperture angle δ. The aperture angle δ indicates a circumferential length of each of the pad apertures 6a, 6b along the inner disc 4. Likewise, the pad angle θ indicates a circumferential length of each friction pad 7a, 7b inside a corresponding pad aperture 6a, 6b. By taking the pad angle θ smaller than the aperture δ ensures that each friction pad 7a, 7b is received in a corresponding pad aperture 6a, 6b with a loose fit, in particular a loose fit in circumferential direction to allow for hysteresis when the inner disc 4 rotates relative to the first and second outer discs 8a, 8b and forces each friction pad 7a, 7b to move. In an exemplary embodiment, the difference δ-θ between the aperture angle δ and the pad angle θ may lie between 2° to 10° degrees.

Depending on a size of the circumferential radius R, choosing larger aperture and pad angles δ, θ may require the use of arched pad apertures 6a, 6b and arched friction pads 7a, 7b as depicted. Taking relatively small aperture and pad angles δ, θ with respect to the circumferential radius R may allow for straight, rectangular pad apertures 6a, 6b and friction pads 7a, 7b.

Referring to Figure 5, in an embodiment the housing 2 may comprises a plurality of axially arranged disc pins 11a, 11b each of which extends through a corresponding disc aperture 12a, 12b in an outer disc edge 13 of the first outer disc 8a and the second outer disc 8b. The plurality of axially arranged disc pins 11a, 11b ensure that the first outer disc 8a and second outer disc 8b are blocked from rotating relative to the housing 2 when each of the friction pads 7a, 7b slides along the first and second outer discs 8a, 8b as the inner disc 4 rotates relative to the housing 2.

In an advantageous embodiment, the first outer disc 8a is axially movable along each disc pin 11a, 11b, thereby allowing the first outer disc 8a to be biased and moved toward the second outer disc 8b and as such allow for frictional engagement between each of the friction pads 7a, 7b and the first and second outer discs 8a, 8b. In a further embodiment, the second outer disc 8b may also be axially movable along each disc pin 11a, 11b.

As further depicted in Figure 5 and 7, in an embodiment the inner disc 4 may comprises a plurality of recesses 4a, 4b circumferentially arranged along an inner disc edge 14 of the inner disc 4, wherein each disc pin 11a, 11b extends through a corresponding recess of the plurality of recesses 4a, 4b, and wherein a circumferential gap 15 is provided between each disc pin 11a, 11b and the inner disc 4. This embodiment ensures that the inner disc 4 is allowed to rotate relative to the housing 2 and wherein the circumferential gap 15, when taken sufficiently large, prevents contact between the inner disc 4 and each of the disc pins 11a, 11b.

Referring to Figure 3 and 4, when the PTO damper device 1 is in use and the shaft S is received by the primary shaft receiving portion 3 and the secondary shaft receiving portion 5, it is advantageous to provide journalled support to the shaft S and good alignment thereof with respect to the longitudinal axis L. To that end an embodiment is provided wherein the housing 2 comprises two opposing longitudinal ends 2a, 2b each of which comprises an end bore 16a, 16b for receiving a bearing member 17a, 17b. The two end bores 16a, 16b and bearing members 17a, 17b received thereby provide support to the shaft S over a longest distance along the longitudinal axis L. It is further noted that in an advantageous embodiment as depicted, one of the bearing members 17a may be utilized to keep the inner disc 4 and the first and second outer discs 8a, 8b properly positioned in the housing 2 when the first outer disc 8a is biased toward the second outer disc 8a.

It was mentioned earlier that the primary shaft receiving portion 3 is configured to receive a driving or driven shaft S and provide an angular clearance fit engagement Fc with the shaft S. The secondary shaft receiving portion 5 is configured to receive the shaft S and provide a tight fit engagement Ft with the shaft S. The angular clearance fit engagement Fc provides an angular clearance α through which the shaft S is able to rotate relative to the primary shaft receiving portion 3 of the housing 2. However, when the shaft S rotates to an angular position equalling the angular clearance α in a particular rotational direction (e.g. clockwise or counter clockwise), then abutment in circumferential direction occurs between the shaft S and the primary shaft receiving portion 3. This abutment allows high loads imposed by the driving member to be transferred by the PTO damper device 1.

When rotation of the shaft S relative to the housing 2 remains within the angular clearance α, the tight fit engagement Ft between the shaft S and the secondary shaft receiving portion 5 ensures that the inner disc 4 rotates in unison with the shaft S relative to the first and second outer discs 8a, 8b, thereby providing damping action by virtue of the resilient rotational engagement with the first and second outer discs 8a, 8b. The PTO damper device 1 exhibits hysteresis by virtue of the loosely fitted friction pads 7a, 7b in corresponding pad apertures 6a, 6b of the inner disc 4. The difference δ-θ between the aperture angle δ and the pad angle θ determines angular positions of the shaft S for which energy is absorbed by frictional engagement between each of the friction pads 7a, 7b and the first and second outer discs 8a, 8b.

The angular clearance fit engagement Fc provided by the primary shaft receiving portion 3, and the tight fit engagement Ft provided by the secondary shaft receiving portion 5 can be achieved in a number of advantageous ways. For example, Figure 2 shows utilization of an internally splined primary shaft receiving portion 3 and an internally splined secondary shaft receiving portion 5. The shaft S to be received by the PTO damper device 1 is then provided with an external spline for congruent engagement with the internally splined primary and secondary shaft receiving portions 3, 5.

Referring to Figures 2, 4, 6 and 7, an embodiment is shown wherein the primary shaft receiving portion 3 comprises a plurality of primary spline teeth 3a and a plurality of primary spline grooves 3b, wherein each primary spline groove 3b has a primary groove width w1 (see Figure 6).In the embodiment shown, the primary spline teeth 3a and primary spline grooves 3b are considered to be of the internal type.

Further, the secondary shaft receiving portion 5 comprises a plurality of secondary spline teeth 5a and a plurality of secondary spline grooves 5b, wherein each secondary spline groove 5b has a secondary groove width w2 (see Figure 6). In the embodiment shown, the secondary spline teeth 5a and secondary spline grooves 5b are considered to be of the internal type also.

In Figure 6 it is shown that the primary groove width w1 is larger than the secondary groove width w2 for providing the angular clearance fit engagement Fc between the primary shaft receiving portion 3 and the shaft S. This embodiment ensures that when an externally splined shaft S is in tight fit engagement Ft with the secondary spline teeth 5a and the secondary spline grooves 5b, that the angular clearance fit engagement Fc is achieved with the primary spline teeth 3a by virtue of the larger primary groove width w1 of the primary spline grooves 3b. The difference between the primary groove width w1 and the secondary groove width w2 determines the angular clearance α and thus the freedom of rotation of the shaft S relative to the housing 2.

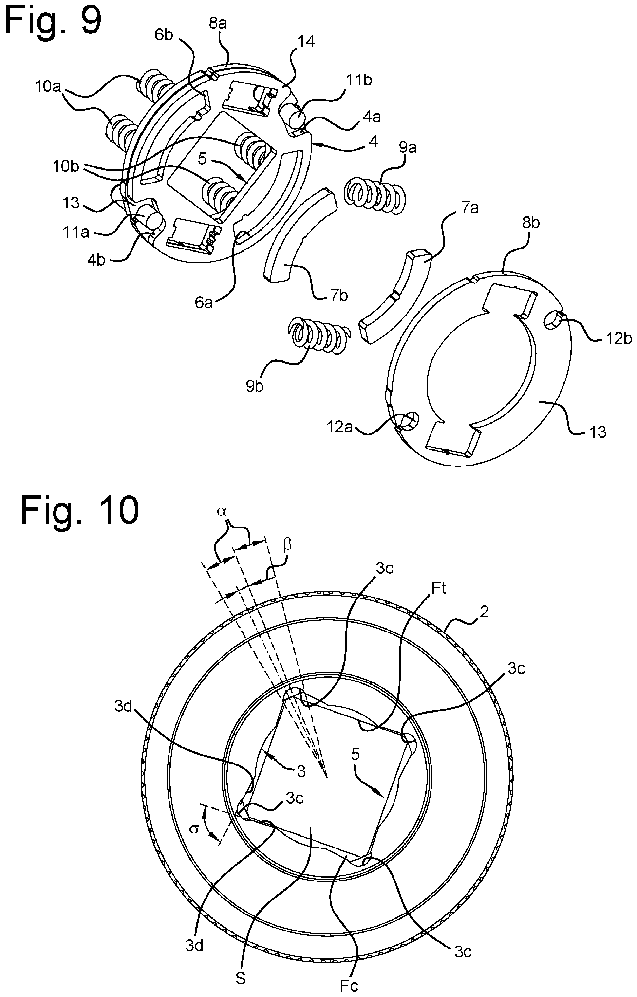

In Figure 8, 9 and the third axial view V3 of Figure 10, an alternative embodiment is depicted wherein the primary shaft receiving portion 3 comprises a substantially square primary inner circumference, and wherein the secondary shaft receiving portion 5 comprises a substantially square secondary inner circumference. The square secondary inner circumference is smaller than the square primary inner circumference for providing the angular clearance fit engagement Fc between the primary shaft receiving portion 3 and the shaft S. This embodiment allows an externally square shaft S to be received with a tight fit engagement Ft by the square secondary inner circumference of the secondary shaft receiving portion 5, and wherein the externally square shaft S is receivable with an angular clearance fit engagement Fc by the larger square primary inner circumference of the primary shaft receiving portion 3. The angular clearance fit engagement Fc as depicted in Figure 10 then provides the needed angular clearance α. Loads imposed by the driving member are then transferred by the PTO damper device 1 when the externally square shaft S abuts, in circumferential sense, the square primary inner circumference of the primary shaft receiving portion 3.

In an advantageous embodiment, see Figure 10, the square primary inner circumference may comprise four corner portions 3c of which at least one corner portion 3c comprises two shaft abutment surfaces 3d arranged on opposing sides of the at least one corner portion 3c, and wherein the two shaft abutment surfaces 3d are at an abutment angle σ of less than 90° degrees as depicted. Depending on the direction of rotation, this embodiment allows loads transferred by the PTO damper device 1 to be evenly distributed along one of the two shaft abutment surfaces 3d when an angular position of the shaft S relative to the housing 2 has reached the available angular clearance α. Note that the angular clearance α is dependent on the difference in size between the square primary inner circumference and the square secondary inner circumference, as well as the abutment angle α needed to allow a straight side of an externally square shaft S to engage one of the two shaft abutment surfaces 3d in parallel manner for achieving optimal load distribution.

## Claims

1. A power take-off damper device (1) for use between a driving member and a driven member, comprising a housing (2) provided with a primary shaft receiving portion (3), and an inner disc (4) arranged in the housing (2) and wherein the inner disc (4) is provided with a secondary shaft receiving portion (5);
wherein the primary shaft receiving portion (3) and the secondary shaft receiving portion (5) are axially spaced apart and concentrically arranged along a longitudinal axis (L) of the housing (2);
wherein the inner disc (4) comprises a plurality of circumferentially arranged pad apertures (6a, 6b) each of which apertures (6a, 6b) has arranged therein a loosely fitted friction pad (7a, 7b);
a first outer disc (8a) and a second outer disc (8b) arranged in the housing (2) along the longitudinal axis (L) on opposing sides of the inner disc (4), wherein the first outer disc (8a) and the second outer disc (8b) are rotationally immovable with respect to the housing (2);
wherein the first outer disc (8a) is axially movable along the longitudinal axis (L) and resiliently biased toward the second outer disc (8b), wherein the first outer disc (8a) and the second outer disc (8b) are in frictional engagement with each friction pad (7a, 7b); and
wherein the inner disc (4) is rotatable relative to the first outer disc (8a) and the second outer disc (8b) and in resilient rotational engagement with the first outer disc (8a) and the second outer disc (8b);
**characterized in that**
the primary shaft receiving portion (3) is configured to receive a driving or driven shaft (S) and provide an angular clearance fit engagement (Fc) with the shaft (S), and wherein the secondary shaft receiving portion (5) is configured to receive the shaft (S) and provide a tight fit engagement (Ft) with the shaft (S).

2. The power take-off damper device according to claim 1, wherein the primary shaft receiving portion (3) and the secondary shaft receiving portion (5) have an angular offset (β) when the power take-off damper device (1) is in rest.

3. The power take-off damper device according to claim 1 or 2, wherein the primary shaft receiving portion (3) has a shaft receiving axial width (s) larger than an inner disc width (t2) of the inner disc (4).

4. The power take-off damper device according to any of claims 1-3, further comprising a plurality of circumferentially arranged first spring members (9a, 9b) in resilient engagement with the inner disc (4), the first outer disc (8a) and the second outer disc (8b); and
wherein each first spring member (9a, 9b) and each pad apertures (6a, 6b) are arranged along a substantially similar circumferential radius (R) as measured from the longitudinal axis (L).

5. The power take-off damper device according to any of claims 1-4, further comprising a plurality of second spring members (10a, 10b) arranged in the housing (2) and axially biasing the first outer disc (8a) toward the second outer disc (8b).

6. The power take-off damper device according to claim 5, wherein each pad apertures (6a, 6b) is aligned with one or more second spring members of the plurality of second spring members (10a, 10b).

7. The power take-off damper device according to any of claims 1-6, wherein each pad aperture (6a, 6b) circumferentially spans an aperture angle (δ), and wherein each friction pad (7a, 7b) circumferentially spans a pad angle (θ) which is less than the aperture angle (δ).

8. The power take-off damper device according to any of claims 1-7, wherein the housing (2) comprises a plurality of axially arranged disc pins (11a, 11b) each of which extends through a corresponding disc aperture (12a, 12b) in an outer disc edge (13) of the first outer disc (8a) and the second outer disc (8b).

9. The power take-off damper device according to claim 8, wherein the first outer disc (8a) is axially movable along each disc pin (11a, 11b).

10. The power take-off damper device according to claim 8 or 9, wherein the inner disc (4) comprises a plurality of recesses (4a, 4b) circumferentially arranged along an inner disc edge (14) of the inner disc (4),
wherein each disc pin (11a, 11b) extends through a corresponding recess of the plurality of recesses (4a, 4b) and wherein a circumferential gap (15) is provided between each disc pin (11a, 11b) and the inner disc (4).

11. The power take-off damper device according to any of claims 1-10, wherein the housing (2) comprises two opposing longitudinal ends (2a, 2b) each of which comprises an end bore (16a, 16b) for receiving a bearing (17a, 17b).

12. The power take-off damper device according to any of claims 1-11, wherein the primary shaft receiving portion (3) comprises a plurality of primary spline teeth (3a) and a plurality of primary spline grooves (3b), wherein each primary spline groove (3b) has a primary groove width (w1), and
wherein the secondary shaft receiving portion (5) comprises a plurality of secondary spline teeth (5a) and a plurality of secondary spline grooves (5b), wherein each secondary spline groove (5b) has a secondary groove width (w2),
wherein the primary groove width (w1) is larger than the secondary groove width (w2) for providing the angular clearance fit engagement (Fc) between the primary shaft receiving portion (3) and the shaft (S).

13. The power take-off damper device according to any of claims 1-11, wherein the primary shaft receiving portion (3) comprises a substantially square primary inner circumference, and wherein the secondary shaft receiving portion (5) comprises a substantially square secondary inner circumference,
wherein the secondary inner circumference is smaller than the primary inner circumference for providing the angular clearance fit engagement (Fc) between the primary shaft receiving portion (3) and the shaft (S).

14. The power take-off damper device according to claim 13, wherein the primary inner circumference comprises four corner portions (3c), wherein at least one corner portion (3c) comprises two shaft abutment surfaces (3d) arranged on opposing sides of the at least one corner portion (3c), and wherein the two shaft abutment surfaces (3d) are at an abutment angle (σ) of less than 90° degrees.

15. The power take-off damper device according to any of claims 1-14, wherein the housing (2) comprises a plurality of mounting holes (18) for releasable connection with a driving or driven member.

## Patentansprüche

1. Eine Zapfwellen-Dämpfungsvorrichtung (1) zur Verwendung zwischen einem Antriebselement und einem Abtriebselement, umfassend ein Gehäuse (2), das mit einem Primärwellenaufnahmeabschnitt (3) versehen ist, und eine Innenscheibe (4), die in dem Gehäuse (2) angeordnet ist, wobei die Innenscheibe (4) mit einem Sekundärwellenaufnahmeabschnitt (5) versehen ist;
wobei der Primärwellenaufnahmeabschnitt (3) und der Sekundärwellenaufnahmeabschnitt (5) axial voneinander beabstandet und konzentrisch entlang einer Längsachse (L) des Gehäuses (2) angeordnet sind;
wobei die Innenscheibe (4) eine Vielzahl von in Umfangsrichtung angeordneten Belagsaussparungen (6a, 6b) aufweist, wobei in jeder dieser Aussparungen (6a, 6b) ein lose sitzender Reibbelag (7a, 7b) angeordnet ist;
eine erste Außenscheibe (8a) und eine zweite Außenscheibe (8b), die im Gehäuse (2) entlang der Längsachse (L) auf gegenüberliegenden Seiten der Innenscheibe (4) angeordnet sind, wobei die erste Außenscheibe (8a) und die zweite Außenscheibe (8b) in Bezug auf das Gehäuse (2) drehfest sind;
wobei die erste Außenscheibe (8a) entlang der Längsachse (L) axial beweglich ist und elastisch in Richtung der zweiten Außenscheibe (8b) vorgespannt ist, wobei die erste Außenscheibe (8a) und die zweite Außenscheibe (8b) mit jedem Reibbelag (7a, 7b) im Reibeingriff stehen; und
wobei die Innenscheibe (4) relativ zur ersten Außenscheibe (8a) und zur zweiten Außenscheibe (8b) drehbar ist und in elastischem Dreh-Kraftschluss mit der ersten Außenscheibe (8a) und der zweiten Außenscheibe (8b) steht;
**dadurch gekennzeichnet, dass**
der Primärwellenaufnahmeabschnitt (3) so konfiguriert ist, dass er eine Antriebs- oder Abtriebswelle (S) aufnimmt und eine Winkelspielpassung (Fc) mit der Welle (S) gewährleistet, und wobei der Sekundärwellenaufnahmeabschnitt (5) so konfiguriert ist, dass er die Welle (S) aufnimmt und eine Presspassung (Ft) mit der Welle (S) gewährleistet.

2. Die Zapfwellen-Dämpfungsvorrichtung gemäß Anspruch 1, wobei der Primärwellenaufnahmeabschnitt (3) und der Sekundärwellenaufnahmeabschnitt (5) einen Winkelversatz (13) aufweisen, wenn sich die Zapfwellen-Dämpfungsvorrichtung (1) in Ruhestellung befindet.

3. Die Zapfwellen-Dämpfungsvorrichtung gemäß Anspruch 1 oder 2, wobei der Primärwellenaufnahmeabschnitt (3) eine Wellenaufnahme-Axialbreite (s) aufweist, die größer ist als eine Innenscheibenbreite (t2) der Innenscheibe (4).

4. Die Zapfwellen-Dämpfungsvorrichtung gemäß einem der Ansprüche 1 bis 3, die ferner eine Vielzahl von in Umfangsrichtung angeordneten ersten Federelementen (9a, 9b) aufweist, die in elastischem Eingriff mit der inneren Scheibe (4), der ersten äußeren Scheibe (8a) und der zweiten äußeren Scheibe (8b) stehen; und
wobei jedes erste Federelement (9a, 9b) und jede Belagsaussparung (6a, 6b) entlang eines im Wesentlichen ähnlichen Umfangsradius (R), gemessen von der Längsachse (L), angeordnet sind.

5. Die Zapfwellen-Dämpfungsvorrichtung gemäß einem der Ansprüche 1 bis 4, die ferner eine Vielzahl von zweiten Federelementen (10a, 10b) umfasst, die in dem Gehäuse (2) angeordnet sind und die erste Außenscheibe (8a) axial in Richtung der zweiten Außenscheibe (8b) vorspannen.

6. Die Zapfwellen-Dämpfungsvorrichtung gemäß Anspruch 5, wobei jede Belagsaussparung (6a, 6b) mit einem oder mehreren zweiten Federelementen der Vielzahl zweiter Federelemente (10a, 10b) ausgerichtet ist.

7. Die Zapfwellen-Dämpfungsvorrichtung gemäß einem der Ansprüche 1 bis 6, wobei jede Belagsaussparung (6a, 6b) einen Aussparungswinkel (δ) in Umfangsrichtung aufspannt und wobei jeder Reibbelag (7a, 7b) einen Belagswinkel (θ) in Umfangsrichtung aufspannt, der kleiner ist als der Aussparungswinkel (δ).

8. Die Zapfwellen-Dämpfungsvorrichtung gemäß einem der Ansprüche 1 bis 7, wobei das Gehäuse (2) mehrere axial angeordnete Scheibenstifte (11a, 11b) umfasst, von denen sich jeder durch eine entsprechende Scheibenöffnung (12a, 12b) in einem äußeren Scheibenrand (13) der ersten äußeren Scheibe (8a) und der zweiten äußeren Scheibe (8b) erstreckt.

9. Die Zapfwellen-Dämpfungsvorrichtung gemäß Anspruch 8, wobei die erste Außenscheibe (8a) entlang jedes Scheibenstifts (11a, 11b) axial beweglich ist.

10. Die Zapfwellen-Dämpfungsvorrichtung gemäß Anspruch 8 oder 9, wobei die innere Scheibe (4) eine Vielzahl von Aussparungen (4a, 4b) umfasst, die in Umfangsrichtung entlang eines inneren Scheibenrands (14) der inneren Scheibe (4) angeordnet sind,
wobei sich jeder Scheibenstift (11a, 11b) durch eine entsprechende Aussparung der Vielzahl von Aussparungen (4a, 4b) erstreckt und wobei zwischen jedem Scheibenstift (11a, 11b) und der inneren Scheibe (4) ein Umfangsspalt (15) vorgesehen ist.

11. Die Zapfwellen-Dämpfungsvorrichtung gemäß einem der Ansprüche 1 bis 10, wobei das Gehäuse (2) zwei gegenüberliegende Längsenden (2a, 2b) umfasst, von denen jedes eine Endbohrung (16a, 16b) zur Aufnahme eines Lagers (17a, 17b) umfasst.

12. Die Zapfwellen-Dämpfungsvorrichtung gemäß einem der Ansprüche 1 bis 11, wobei der Primärwellenaufnahmeabschnitt (3) eine Vielzahl von Primärverzahnungszähnen (3a) und eine Vielzahl von Primärverzahnungsnuten (3b) umfasst, wobei jede Primärverzahnungsnut (3b) eine Primärnutbreite (w1) aufweist, und
wobei der Sekundärwellenaufnahmeabschnitt (5) eine Vielzahl von Sekundärverzahnungszähnen (5a) und eine Vielzahl von Sekundärverzahnungsnuten (5b) umfasst, wobei jede Sekundärverzahnungsnut (5b) eine Sekundärnutbreite (w2) aufweist,
wobei die Primärnutbreite (w1) größer ist als die Sekundärnutbreite (w2), um die Winkelspielpassung (Fc) zwischen dem Primärwellenaufnahmeabschnitt (3) und der Welle (S) zu gewährleisten.

13. Die Zapfwellen-Dämpfungsvorrichtung gemäß einem der Ansprüche 1 bis 11, wobei der Primärwellenaufnahmeabschnitt (3) einen im Wesentlichen quadratischen primären Innenumfang aufweist und wobei der Sekundärwellenaufnahmeabschnitt (5) einen im Wesentlichen quadratischen sekundären Innenumfang aufweist,
wobei der sekundäre Innenumfang kleiner ist als der primäre Innenumfang, um die Winkelspielpassung (Fc) zwischen dem Primärwellenaufnahmeabschnitt (3) und der Welle (S) zu gewährleisten.

14. Die Zapfwellen-Dämpfungsvorrichtung gemäß Anspruch 13, wobei der primäre Innenumfang vier Eckabschnitte (3c) umfasst, wobei mindestens ein Eckabschnitt (3c) zwei Wellenanschlagflächen (3d) umfasst, die auf gegenüberliegenden Seiten des mindestens einen Eckabschnitts (3c) angeordnet sind, und wobei die beiden Wellenanschlagflächen (3d) einen Anschlagwinkel (σ) von weniger als 90° aufweisen.

15. Die Zapfwellen-Dämpfungsvorrichtung gemäß einem der Ansprüche 1 bis 14, wobei das Gehäuse (2) eine Vielzahl von Befestigungslöchern (18) für eine lösbare Verbindung mit einem Antriebs- oder Abtriebselement umfasst.

## Revendications

1. Dispositif amortisseur de prise de force (1) destiné à être utilisé entre un élément d'entraînement et un élément entraîné, comprenant un boîtier (2) pourvu d'une partie de réception d'arbre primaire (3), et un disque intérieur (4) disposé dans le boîtier (2) et où le disque intérieur (4) est pourvu d'une partie de réception d'arbre secondaire (5) ;
où la partie de réception d'arbre primaire (3) et la partie de réception d'arbre secondaire (5) sont espacées axialement et disposées concentriquement le long d'un axe longitudinal (L) du boîtier (2) ;
où le disque intérieur (4) comprend une pluralité d'ouvertures de patins (6a, 6b) disposées circonférentiellement, chacune desdites ouvertures (6a, 6b) a un patin de friction disposé à l'intérieur (7a, 7b) et ajusté de manière lâche ;
un premier disque extérieur (8a) et un deuxième disque extérieur (8b) disposés dans le boîtier (2) le long de l'axe longitudinal (L) sur les côtés opposés du disque intérieur (4), où le premier disque extérieur (8a) et le deuxième disque extérieur (8b) sont immobiles en rotation par rapport au boîtier (2) ;
où le premier disque extérieur (8a) est mobile axialement le long de l'axe longitudinal (L) et sollicité de manière élastique vers le deuxième disque extérieur (8b), où le premier disque extérieur (8a) et le deuxième disque extérieur (8b) sont en prise par friction avec chaque patin de friction (7a, 7b) ; et
où le disque intérieur (4) peut tourner par rapport au premier disque extérieur (8a) et au deuxième disque extérieur (8b) et est en prise de rotation élastique avec le premier disque extérieur (8a) et le deuxième disque extérieur (8b) ;
**caractérisé en ce que** la partie de réception d'arbre primaire (3) est configurée pour recevoir un arbre d'entraînement ou entraîné (S) et fournir un engagement à ajustement angulaire (Fc) avec l'arbre (S), et où la partie de réception d'arbre secondaire (5) est configurée pour recevoir l'arbre (S) et fournir un engagement à ajustement serré (Ft) avec l'arbre (S).

2. Dispositif amortisseur de prise de force selon la revendication 1, où la partie de réception d'arbre primaire (3) et la partie de réception d'arbre secondaire (5) présentent un décalage angulaire (β) lorsque le dispositif amortisseur de prise de force (1) est au repos.

3. Dispositif amortisseur de prise de force selon la revendication 1 ou 2, où la partie de réception d'arbre primaire (3) présente une largeur axiale de réception d'arbre (s) supérieure à une largeur de disque intérieur (t2) du disque intérieur (4).

4. Dispositif amortisseur de prise de force selon l'une quelconque des revendications 1 à 3, comprenant en outre une pluralité de premiers éléments ressorts (9a, 9b) disposés circonférentiellement en engagement élastique avec le disque intérieur (4), le premier disque extérieur (8a) et le deuxième disque extérieur (8b) ; et
où chaque premier élément ressort (9a, 9b) et chaque ouverture de patin (6a, 6b) sont disposés le long d'un rayon circonférentiel sensiblement similaire (R) comme mesuré à partir de l'axe longitudinal (L).

5. Dispositif amortisseur de prise de force selon l'une quelconque des revendications 1 à 4, comprenant en outre une pluralité de deuxièmes éléments ressorts (10a, 10b) disposés dans le boîtier (2) et sollicitant axialement le premier disque extérieur (8a) vers le deuxième disque extérieur (8b).

6. Dispositif amortisseur de prise de force selon la revendication 5, où chaque ouverture de patin (6a, 6b) est alignée avec un ou plusieurs deuxièmes éléments ressorts de la pluralité de deuxièmes éléments ressorts (10a, 10b).

7. Dispositif amortisseur de prise de force selon l'une quelconque des revendications 1 à 6, où chaque ouverture de patin (6a, 6b) s'étend circonférentiellement sur un angle d'ouverture (δ), et où chaque patin de friction (7a, 7b) s'étend circonférentiellement sur un angle de patin (θ) qui est inférieur à l'angle d'ouverture (δ).

8. Dispositif amortisseur de prise de force selon l'une quelconque des revendications 1 à 7, où le boîtier (2) comprend une pluralité de broches de disque (11a, 11b) disposées axialement, chacune d'entre elles s'étendant à travers une ouverture de disque correspondante (12a, 12b) dans un bord de disque extérieur (13) du premier disque extérieur (8a) et du deuxième disque extérieur (8b).

9. Dispositif amortisseur de prise de force selon la revendication 8, où le premier disque extérieur (8a) est mobile axialement le long de chaque broche de disque (11a, 11b).

10. Dispositif amortisseur de prise de force selon la revendication 8 ou 9, où le disque intérieur (4) comprend une pluralité d'évidements (4a, 4b) disposés circonférentiellement le long d'un bord de disque intérieur (14) du disque intérieur (4),
où chaque broche de disque (11a, 11b) s'étend à travers un évidement correspondant de la pluralité d'évidements (4a, 4b) et où un espace circonférentiel (15) est prévu entre chaque broche de disque (11a, 11b) et le disque intérieur (4).

11. Dispositif amortisseur de prise de force selon l'une quelconque des revendications 1 à 10, où le boîtier (2) comprend deux extrémités longitudinales opposées (2a, 2b) chacune d'entre elles comprend un alésage d'extrémité (16a, 16b) destiné à recevoir un palier (17a, 17b).

12. Dispositif amortisseur de prise de force selon l'une quelconque des revendications 1 à 11, où la partie de réception d'arbre primaire (3) comprend une pluralité de dents de cannelure primaires (3a) et une pluralité de rainures de cannelure primaires (3b), où chaque rainure de cannelure primaire (3b) a une largeur de rainure primaire (w1), et
où la partie de réception d'arbre secondaire (5) comprend une pluralité de dents de cannelure secondaires (5a) et une pluralité de rainures de cannelure secondaires (5b), où chaque rainure de cannelure secondaire (5b) a une largeur de rainure secondaire (w2),
où la largeur de rainure primaire (w1) est supérieure à la largeur de rainure secondaire (w2) afin de fournir l'engagement à ajustement angulaire (Fc) entre la partie de réception d'arbre primaire (3) et l'arbre (S).

13. Dispositif d'amortisseur de prise de force selon l'une quelconque des revendications 1 à 11, où la partie de réception d'arbre primaire (3) comprend une circonférence intérieure primaire sensiblement carrée, et où la partie de réception d'arbre secondaire (5) comprend une circonférence intérieure secondaire sensiblement carrée,
où la circonférence intérieure secondaire est inférieure à la circonférence intérieure primaire afin de fournir l'engagement à ajustement angulaire (Fc) entre la partie de réception d'arbre primaire (3) et l'arbre (S).

14. Dispositif amortisseur de prise de force selon la revendication 13, où la circonférence intérieure primaire comprend quatre parties d'angle (3c), où au moins une partie d'angle (3c) comprend deux surfaces de butée d'arbre (3d) disposées sur des côtés opposés de l'au moins une partie d'angle (3c), et où les deux surfaces de butée d'arbre (3d) forment un angle de butée (σ) inférieur à 90° degrés.

15. Dispositif amortisseur de prise de force selon l'une quelconque des revendications 1 à 14, où le boîtier (2) comprend une pluralité de trous de montage (18) pour une connexion amovible avec un élément d'entraînement ou entraîné.
